# EUROPEAN PATENT APPLICATION

(11) **EP 4 730 252 A1**
(43) Date of publication of application: **22.04.2026**
(21) Application number: 24823070.8
(22) Date of filing: 03.04.2024
(51) Int. Cl.: G06Q 50/10

(54) **CONTROL DEVICE, CONTROL METHOD, AND PROGRAM**

(30) Priority: 15.06.2023 JP 2023098757
(71) Applicant: Panasonic Intellectual Property Management Co., Ltd., Kadoma-shi, Osaka 571-0057 (JP)
(72) Inventor: INOUE, Ryo, kadoma-shi, Osaka 571-0057 (JP); SASAGAWA, Michiko, kadoma-shi, Osaka 571-0057 (JP); TANABE, Naohisa, kadoma-shi, Osaka 571-0057 (JP)
(74) Representative: Novagraaf International SA
(86) International application number: PCT/JP2024/013737
(87) International publication number: WO 2024/257447

(57) **Abstract**

A control device (100) is a control device (100) for presenting a user with presentation information. The control device (100) includes: a receiver (an operation history receiver (101) and a log information extractor (106), and a time receiver (102)) that receives, from an apparatus (11) that is communicatively connected via a network, at least one of log information or time information; a presentation information generator (109) that determines a presentation pattern of the presentation information in accordance with at least one of the log information received or the time information received, and generates the presentation information in line with the presentation pattern determined; and a transmitter (a presentation information transmitter (104)) that transmits the presentation information generated to a presentation apparatus (a presentation device (14)) that is communicably connected via the network to cause the presentation apparatus to present the user with the presentation information.

## Description

### [Technical Field]

The present disclosure relates to a control device, a control method executed by the control device, and a program.

### [Background Art]

Techniques for approaching (i.e., presenting information to) users by devices reproducing speeches or the like for the users have been conventionally used. For example, Patent Literature (PTL) 1 discloses a voice server that synthesizes and reproduces speeches with utterance characteristics according to user attributes.

### [Citation List]

### [Patent Literature]

[PTL 1] Japanese Unexamined Patent Application Publication No. 2015-164251

### [Summary of Invention]

### [Technical Problem]

Meanwhile, when such devices disclosed by the above-described conventional techniques make approaches to users, there have been some instances where the devices fail to give full consideration to current situations of the users, resulting in presenting the users with insignificant or annoying information. In view of the above, the present disclosure provides a control device, etc., which are capable of presenting users with appropriate information.

### [Solution to Problem]

A control device according to one aspect of the present disclosure is a control device for presenting a user with presentation information. The control device includes: a receiver that receives, from an apparatus that is communicatively connected via a network, at least one of log information or time information; a presentation information generator that determines a presentation pattern of the presentation information in accordance with at least one of the log information received or the time information received, and generates the presentation information in line with the presentation pattern determined; and a transmitter that transmits the presentation information generated to a presentation apparatus that is communicably connected via the network to cause the presentation apparatus to present the user with the presentation information.

A control method according to one aspect of the present disclosure is a control method to be executed by a control device for presenting a user with presentation information. The control method includes: receiving, from an apparatus that is communicatively connected via a network, at least one of log information or time information; determining a presentation pattern of presentation information in accordance with at least one of the log information received or the time information received and generating the presentation information in line with the presentation pattern determined; and transmitting the presentation information generated to a presentation apparatus that is communicably connected via the network to cause the presentation apparatus to present the user with the presentation information.

A program according to one aspect of the present disclosure is a program for causing a computer to execute the above-described control method.

### [Advantageous Effects of Invention]

The control device, etc., according to the present disclosure are capable of presenting users with appropriate information.

### [Brief Description of Drawings]

[FIG. 1]

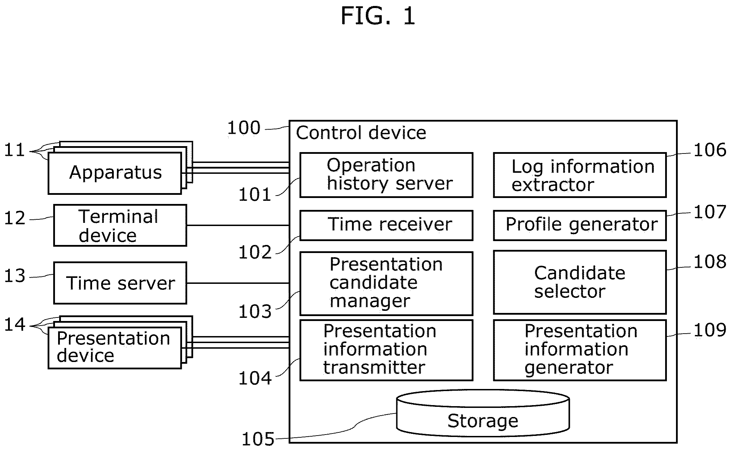

   FIG. 1 is a block diagram illustrating a functional configuration of a presentation system that includes a control device according to an embodiment.
[FIG. 2]

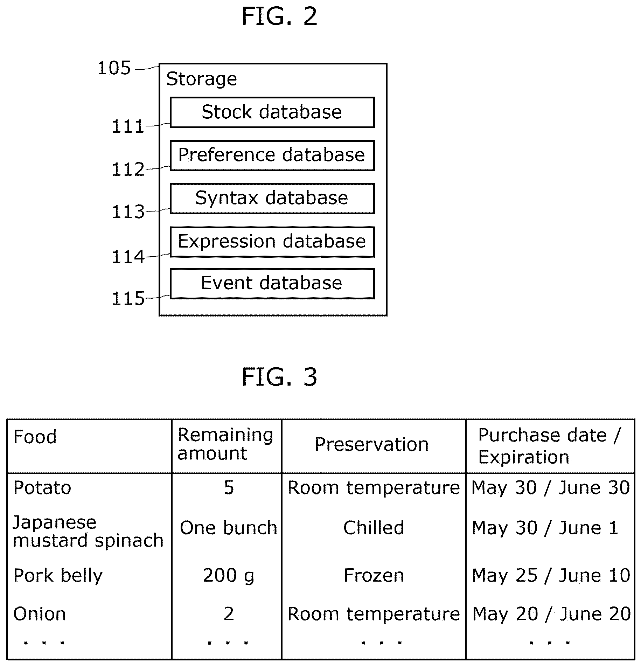

   FIG. 2 is a block diagram illustrating a functional configuration of a storage according to the embodiment.
[FIG. 3]
   FIG. 3 is a diagram illustrating one example of a stock database according to the embodiment.
[FIG. 4A]

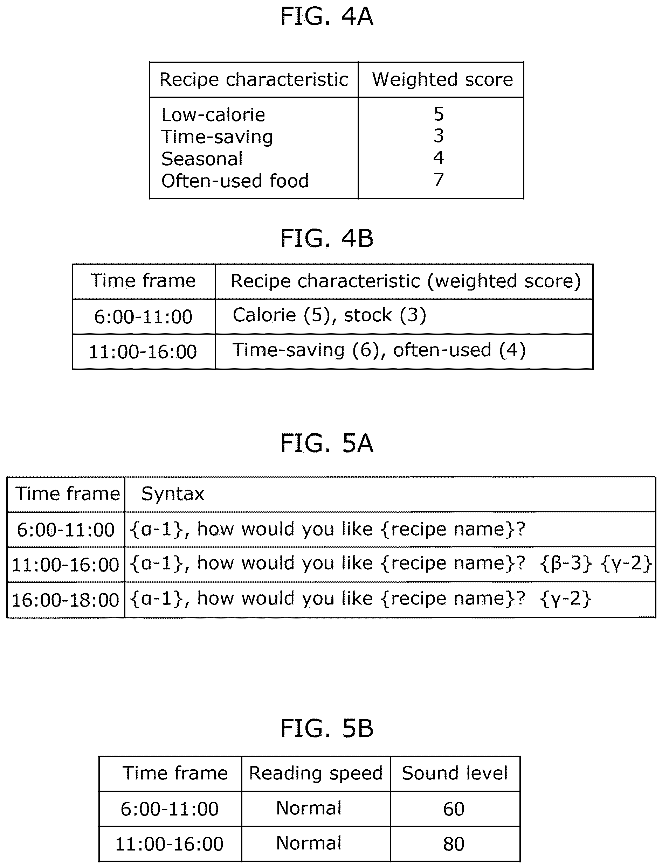

   FIG. 4A is a diagram illustrating one example of a preference database according to the embodiment.
[FIG. 4B]
   FIG. 4B is a diagram illustrating one example of the preference database according to the embodiment.
[FIG. 5A]
   FIG. 5A is a diagram illustrating one example of a syntax database according to the embodiment.
[FIG. 5B]
   FIG. 5B is a diagram illustrating one example of the syntax database according to the embodiment.
[FIG. 6]

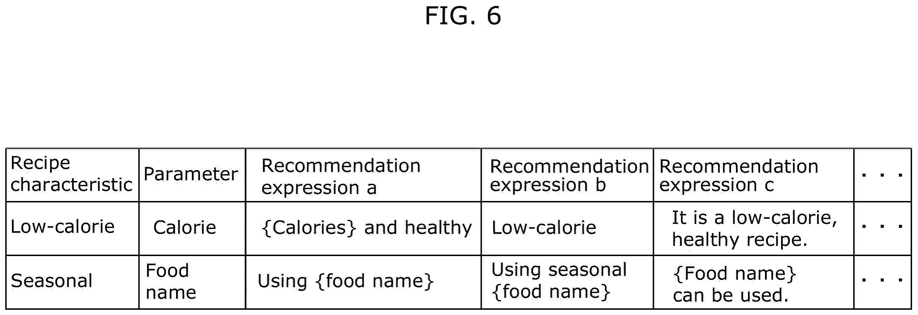

   FIG. 6 is a diagram illustrating one example of an expression database according to the embodiment.
[FIG. 7]

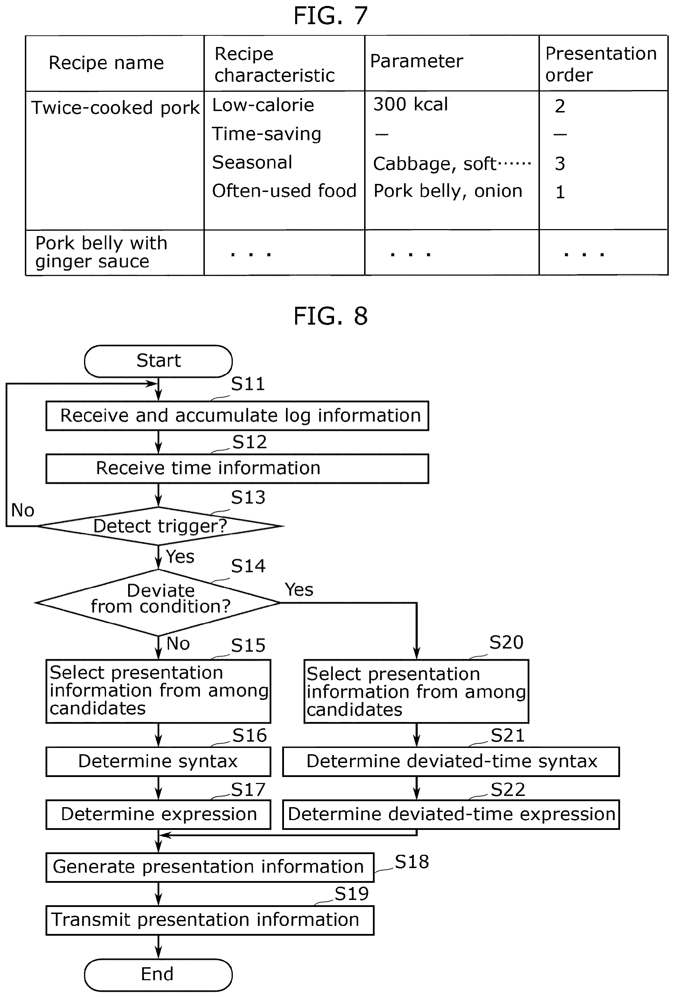

   FIG. 7 is a diagram illustrating one example of a recipe database according to the embodiment.
[FIG. 8]
   FIG. 8 is a flowchart illustrating an example of operation performed by the control device according to the embodiment.
[FIG. 9]

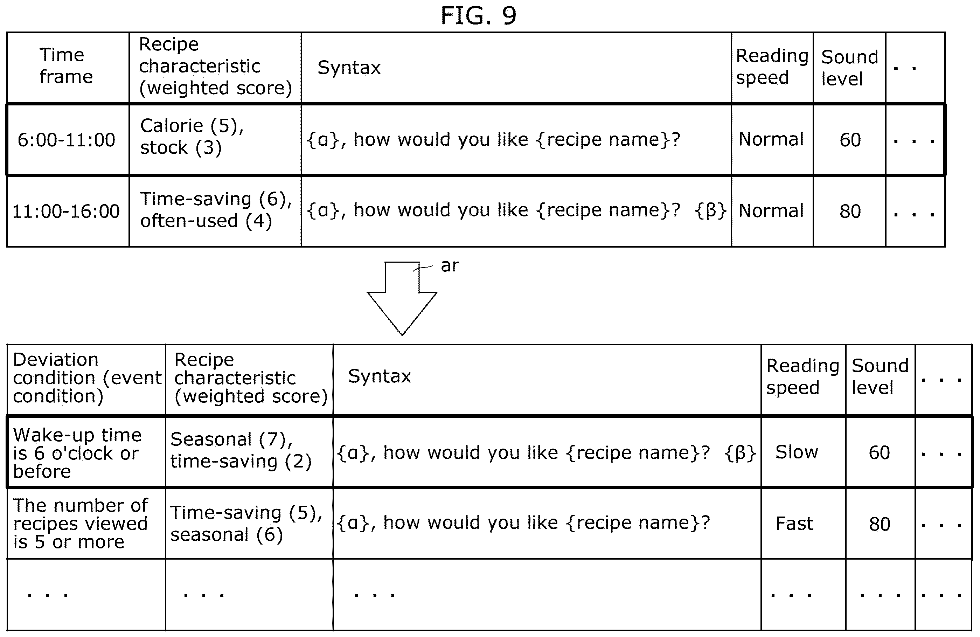

   FIG. 9 is a diagram illustrating one example of an event database according to the embodiment.
[FIG. 10]

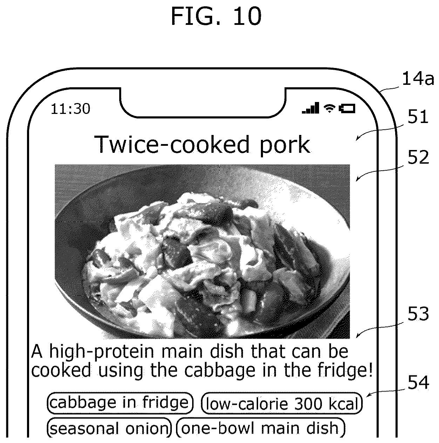

   FIG. 10 is a diagram illustrating an appearance of information presentation according to a variation of the embodiment.

### [Description of Embodiments]

A control device according to aspect 1 of the present disclosure is a control device for presenting a user with presentation information. The control device includes: a receiver that receives, from an apparatus that is communicatively connected via a network, at least one of log information or time information; a presentation information generator that determines a presentation pattern of the presentation information in accordance with at least one of the log information received or the time information received, and generates the presentation information in line with the presentation pattern determined; and a transmitter that transmits the presentation information generated to a presentation apparatus that is communicably connected via the network to cause the presentation apparatus to present the user with the presentation information.

The above-described control device can determine a presentation pattern in accordance with at least one of log information or time information, and can generate presentation information in the determined presentation pattern. As long as the presentation pattern is determined in accordance with the log information of a user and time information, appropriate information suitable for the user can be presented.

Moreover, a control device according to aspect 2 of the present disclosure is the control device stated in aspect 1. In the control device, the presentation information generator: generates profile information of the user based on the log information received at each of a plurality of time points; and determines the presentation pattern in accordance with (i) at least one of the log information received or the time information received and (ii) the profile information generated.

According to the above, the presentation pattern can be further determined based on the profile information.

In addition, a control device according to aspect 3 of the present disclosure is the control device stated in aspect 1 or 2. In the control device, the presentation information generator: generates profile information of the user based on the log information received at each of a plurality of time points; and determines a presentation detail to be contained in the presentation information in accordance with (i) at least one of the log information received or the time information received and (ii) the profile information generated.

According to the above, a presentation detail to be contained in the presentation pattern can be further determined based on the profile information.

Moreover, a control device according to aspect 4 of the present disclosure is the control device stated in aspect 2 or 3. In the control device, the profile information contains a structure database in which a presentation structure of the presentation pattern is set in advance for each of a plurality of time frames, and the presentation information generator determines the presentation pattern to use the presentation structure set for a time frame corresponding to a time indicated in the time information received. The time frame is among the plurality of time frames.

According to the above, a presentation structure of the presentation pattern appropriate for each of time frames can be determined.

In addition, a control device according to aspect 5 of the present disclosure is the control device according to any one of aspects 2 to 4. In the control device, the profile information contains a stock database of an item possessed by the user, and a plurality of time frames include a replenishment time frame during which replenishment of the item is possible and a consumption time frame during which replenishment of the item is impossible. The presentation information generator: when, among the plurality of time frames, a time frame corresponding to a time indicated in the time information received is the replenishment time frame, allows generation of the presentation information predicated on replenishment of the item; and when, among the plurality of time frames, a time frame corresponding to the time indicated in the time information received is the consumption time frame, prohibits generation of the presentation information predicated on replenishment of the item.

According to the above, stock of items can be managed, and the presentation information in accordance with the stock can be generated. Furthermore, in the generation of the presentation information, the presentation information containing information on whether as to consider replenishment of items can be generated depending on whether it is a replenishment time frame or a consumption time frame.

Moreover, a control device according to aspect 6 of the present disclosure is the control device stated in any one of aspects 2 to 5. In the control device, the profile information contains one or more preferences of the user and one or more weighted scores assigned to the one or more preferences. Among candidates for the presentation information, the presentation information generator more preferentially uses, as the presentation information, a candidate having a larger total value of a weighted score assigned to a preference met by the candidate, the preference being among the one or more preferences.

According to the above, the use of a weighted score assigned to each of one or more user preferences can determine, out of candidates, a candidate to be given priority as the candidate to be used for the presentation information.

In addition, a control device according to aspect 7 of the present disclosure is the control device stated in any one of aspects 2 to 6. In the control device, the presentation information generator: determines the presentation pattern of the presentation information as a deviated-time pattern when newly received log information, that is the log information, deviates from a normal-time condition set based on the log information received in past; and generates the presentation information in line with the deviated-time pattern determined.

According to the above, the presentation pattern of the presentation information can be determined as a deviated-time pattern when a deviation from a normal-time condition occurs.

Moreover, a control device according to aspect 8 of the present disclosure is the control device stated in any one of aspects 1 to 7. In the control device, the presentation information is recipe information for cooking a dish.

According to the above, recipe information for cooking a dish can be caused to be presented as the presentation information.

In addition, a control device according to aspect 9 of the present disclosure is the control device stated in any one of aspects 1 to 8. In the control device, the presentation information is reproduced as a speech and presented to the user.

According to the above, the presentation information can be presented to a user by reproducing the presentation information as a speech.

Moreover, a control device according to aspect 10 of the present disclosure is the control device stated in aspect 9. In the control device, the determination of the presentation pattern includes determination of at least one of an utterance syntax of the speech or a speech characteristic of the speech when the presentation information is reproduced. The log information received consists of log information items received, the time information received consists of time information items received, and the presentation information generated consists of presentation information items generated. In the control device, (i) one of the presentation information items generated in accordance with at least one of the log information items received or one of the time information items received and (ii) a different one of the presentation information items generated in accordance with at least one of a different one of the log information items received or a different one of the time information items received have a difference in at least one of the utterance syntax of the speech or the speech characteristic of the speech when the presentation information is reproduced.

According to the above, the determination of the presentation pattern allows presentation of the presentation information with a change in at least one of an utterance syntax of the speech or a speech characteristic of the speech when the presentation information is reproduced as a speech to be presented to the user.

In addition, a control device according to aspect 11 of the present disclosure is the control device stated in any one of aspects 1 to 8. In the control device, the presentation information is displayed as an image and presented to the user.

According to the above, the presentation information is displayed as an image to present the user with the presentation information.

Moreover, a control device according to aspect 12 of the present disclosure is the control device stated in aspect 11. In the control device, the determination of the presentation pattern includes at least one of determination of a display layout of the image or a syntax of a sentence in the image when the presentation information is displayed. The log information received consists of log information items received, the time information received consists of time information items received, and the presentation information generated consists of presentation information items generated. In the control device, (i) one of the presentation information items generated in accordance with at least one of the log information items received or one of the time information items received and (ii) a different one of the presentation information items generated in accordance with at least one of a different one of the log information items received or a different one of the time information items received have a difference in at least one of the display layout of the image or the syntax of the sentence in the image when the presentation information is displayed.

According to the above, the determination of the presentation pattern allows presentation of the presentation information with a change in at least one of a display layout of the image or a text syntax of the image when the presentation information is displayed as the image to be presented to the user.

In addition, a control method according to aspect 13 of the present disclosure is a control method to be executed by a control device for presenting a user with presentation information. The control method includes: receiving, from an apparatus that is communicatively connected via a network, at least one of log information or time information; determining a presentation pattern of presentation information in accordance with at least one of the log information received or the time information received and generating the presentation information in line with the presentation pattern determined; and transmitting the presentation information generated to a presentation apparatus that is communicably connected via the network to cause the presentation apparatus to present the user with the presentation information.

According to the above, the same advantageous effects as the advantageous effects achieved by the above-described control device can be achieved.

Moreover, a program according to aspect 14 of the present disclosure is a program for causing a computer to execute the above-described control method.

According to the above, the same advantageous effects as the advantageous effects achieved by the above-described control device can be achieved using a computer.

Note that these comprehensive or concrete aspects of the present disclosure may be implemented by a system, a method, an integrated circuit, a computer program, or a computer-readable recording medium such as a CD-ROM, and may also be implemented by optionally combining systems, methods, integrated circuits, computer programs, and recording media.

Note that the embodiments below each describe a general or specific example. The numerical values, shapes, elements, the arrangement and connection of the elements, steps, orders of the steps, etc., presented in the embodiments below are mere examples and are not intended to limit the present disclosure. Furthermore, among the elements in the embodiments below, those not recited in any one of the independent claims will be described as optional elements.

In addition, the drawings are schematic diagrams, and do not necessarily provide strictly accurate illustrations. Throughout the drawings, the same reference sign is given to substantially the same element, and redundant description is omitted or simplified.

### [Embodiment]

Hereinafter, a control device according to the present embodiment will be described with reference to FIG. 1 through FIG. 10.

### [Configuration]

First, a configuration of a presentation system that includes a control device according to the present embodiment will be described with reference to FIG. 1 through FIG. 7. FIG. 1 is a block diagram illustrating a functional configuration of the presentation system that includes the control device according to the embodiment. Moreover, FIG. 2 is a block diagram illustrating a functional configuration of a storage according to the embodiment, in other words, a block diagram illustrating various types of databases stored in the storage. Control device 100 according to the present embodiment controls information to be output by presentation device 14 by generating information (hereinafter, also called presentation information) to be presented by presentation device 14 that is used for presenting a user with information. In other words, control device 100 is a device that causes appropriate information to be presented to a user using presentation device 14 by generating presentation information as appropriate information. In the present embodiment, the presentation system includes control device 100, apparatus 11, terminal device 12, time server 13, and presentation device 14. Some of the elements that configure the presentation system may be integrated. Accordingly, except for control device 100, any one of the devices out of apparatus 11, terminal device 12, time server 13, and presentation device 14 may be integrated with different one of the devices.

The presentation system is, for example, a speech presentation system provided in the home of a user, and presents presentation information by reproducing the presentation information as a speech. Note that the presentation system is not limited to a system that presents presentation information by reproducing the presentation information as a speech. A presentation system other than the speech presentation system will be described as another example of the embodiment. The presentation system is not limited to a system provided in the home of a user, and is capable of being provided in facilities such as office buildings, rental spaces, and public facilities. The presentation system can present appropriate presentation information to users who use such facilities in which the presentation systems are provided.

Apparatus 11 is, for example, a home appliance, and is provided inside a home to be used by a user. For example, there are a plurality of apparatuses 11 inside a home. The plurality of apparatuses 11 include apparatuses related to household chores such as cooking appliances and cleaning apparatuses, apparatuses related to entertainment such as audio devices and video output devices, and apparatuses related to daily life such as lighting devices and air conditioners. When a user is using an apparatus related to a household chore, it can be said that the user is in a relatively busy situation. Meanwhile, when the user is using an apparatus related to entertainment, it can be said that the user is not in a relatively busy situation. Moreover, states of a user can be estimated. For instance, a state in which a user is cooking can be estimated from a fact that an apparatus that the user is using is a cooking appliance and operation details found from a usage history (log information) of the apparatus. In addition, a state in which the user is cleaning can be estimated from a time period during which a cleaning apparatus is used. Furthermore, from installation areas and usage histories of apparatuses related to daily life, states of a user, such as the presence or absence of the user, can be estimated. As described above, whether a user is busy or not and a state of the user can be estimated from usage histories (log information) of apparatuses 11. In the present embodiment, log information is obtained from each of apparatuses 11 inside a home to estimate information necessary for estimating states of a user (e.g., (i) a time frame during which the user is busy, (ii) states of household chores for each of time frames, or both (i) and (ii)), and presentation device 14 is controlled such that presentation information is presented in an appropriate presentation pattern in accordance with the time frame.

Moreover, the log information contains not only information on whether apparatus 11 is merely used or not, but may also contain information on how the foregoing apparatus 11 is used. For example, the log information contains information on the usage of a refrigerator, i.e., apparatus 11, based on opening and closing of a door of the refrigerator. When the refrigerator has a configuration capable of obtaining information on items contained in the refrigerator, such information can be further used as log information. Note that terminal device 12 may be included in apparatuses 11. Conversely stated, apparatus 11 may be terminal device 12.

Terminal device 12 is an information terminal such as a smartphone, a tablet terminal, and a personal computer (PC). Terminal device 12 belongs to a user (stated differently, the user owns terminal device 12). For this reason, an operation performed on terminal device 12 can be regarded as an operation performed by the user. The user uses terminal device 12 to access various types of information. For example, the user can search for recipes for a dish that they want to cook for the day, can look for food recommended to be consumed health-wise, and can look for appropriate lifestyle habits. The presentation system then determines presentation information recommended for the user in accordance with the above-described information accessed by the user, and presents the presentation information using presentation device 14. In other words, information in accordance with information accessed by terminal device 12 (information that the user is interested in) is selectively presented as the presentation information. Hereinafter, as one example of the presentation information, an example of presenting recipe information on a recipe for a dish that a user wants to cook for the day will be described. As described above, the presentation information is not limited to recipe information, but every possible information such as food information, lifestyle-habit information, news information, information on recommended stores in the vicinity of the home of a user, and other information items may be used.

Time server 13 is a server that provides time information indicating the current time. Time server 13 may be a time information server on the Internet or a mere clock, for example. Time server 13 may be implemented by terminal device 12.

Presentation device 14 is a device for presenting a user with information, and is one example of a presentation apparatus. Here, a device may be used as presentation device 14 as long as the device includes a loudspeaker that can reproduce a speech for a user. As presentation device 14, an audio device or a television connectable to a network, a smartphone, a tablet terminal, or a PC may be used. Accordingly, terminal device 12 may be used as presentation device 14. As described above, apparatus 11, terminal device 12, time server 13, and presentation device 14 may be implemented by only terminal device 12.

Moreover, when a plurality of presentation devices 14 are present, one or more presentation devices 14 among the plurality of presentation devices 14 are to be selected to present a user with information. Such selection of one or more presentation devices 14 is performed by, for example, control device 100. In the selection of one or more presentation devices 14, control device 100 may detect an actual location of a user on a target date and time to select one or more presentation devices 14 provided in an area to which the location belongs. Meanwhile, when the location of the user cannot be detected, one or more presentation devices 14 provided in an area in which the user is estimated to be present on the target date and time may be selected using states of the user, such as the presence or absence of the user, which have been estimated in advance for each of areas.

Control device 100 is a device that generates speech data indicating recipe information as presentation information based on information received from apparatus 11, terminal device 12, and time server 13, and transmits the speech data to presentation device 14. Control device 100 is implemented as, for example, a cloud server built on the Internet for information processing or an edge server provided in the home of a user. The presentation information (speech data indicating recipe information) transmitted by control device 100 is presented to a user by presentation device 14. Accordingly, control device 100 can be said to be a device that causes presentation information to be presented.

Control device 100 includes operation history receiver 101, time receiver 102, presentation candidate manager 103, presentation information transmitter 104, storage 105, log information extractor 106, profile generator 107, candidate selector 108, and presentation information generator 109.

Operation history receiver 101 is a functional unit that receives an operation history of apparatus 11 or an operation history of terminal device 12 from apparatus 11 or terminal device 12. Operation history receiver 101 outputs the received operation history to log information extractor 106.

Log information extractor 106 is a processing unit that extracts, from the operation history, information to be collected as log information. Operation history receiver 101 and log information extractor 106 are part of the functionality of a receiver that receives log information. A detail of log information to be extracted by log information extractor 106 differs depending on an aspect of presentation information. But, here, from the viewpoint of generating recipe information, information necessary for estimating states of a user (e.g., (i) a time frame during which the user is busy, (ii) states of household chores for each of time frames, or both (i) and (ii)) is extracted as log information. In addition, from the viewpoint of generating recipe information, log information extractor 106 extracts, as log information, items possessed by the user which can be used for cooking, i.e., stock information on food to be used in a recipe. Besides the above, log information extractor 106 also extracts, as log information, information pertaining to user preferences to adapt recipe preferences to the user.

While some of extracted log information items are used as they are for generating recipe information, user profile information generated based on log information items received at respective time points are also used for generating recipe information. Profile generator 107 is used for generating the profile information. Profile generator 107 is a processing unit that generates profile information indicating a user tendency from log information items extracted at a plurality of time points. The profile information will be described later. Note that in the generation of profile information, only log information may be used, both log information and time information may be used, or only time information may be used.

Time receiver 102 is a processing unit that receives, from time server 13, time information indicating the current time. Time receiver 102 is a part of the functionality of a receiver that receives time information.

Presentation candidate manager 103 is a processing unit that operates in conjunction with storage 105 and candidate selector 108 to manage candidates for recipe information to be generated, i.e., candidates for presentation information. Storage 105 and candidate selector 108 will be described later. Presentation candidate manager 103 reads candidates for presentation information from storage 105, and outputs the candidates for presentation information to candidate selector 108. Among the candidates for presentation information, candidate selector 108 selects a recipe in accordance with a predetermined standard, and determines the recipe for presentation.

Presentation information generator 109 is a processing unit that determines a presentation pattern of presentation information based on (i) at least one of log information or time information and (ii) profile information, and generates presentation information in line with the determined presentation pattern. The determination and the like of a presentation pattern of presentation information will be described later.

Presentation information transmitter 104 is a processing unit that transmits generated presentation information to presentation device 14 to cause presentation device 14 to present the presentation information.

Here, as shown in FIG. 2, storage 105 contains, besides the recipe database in which candidates for the above-described recipe information is stored, stock database 111, preference database 112, syntax database 113, expression database 114, and event database 115.

First, stock database 111 will be described. FIG. 3 is a diagram illustrating one example of the stock database according to the embodiment. Stock database 111 is a database contained in profile information, and is generated from log information. Stock database 111 stores information on food possessed by a user. Specifically, as shown in FIG. 3, stock database 111 contains names of food possessed as stock (first column), remaining amounts of the food (second column), preservation state (third column), purchase date and expiration date (a preset date such as the best-before date of food or a time limit optionally set by a user) (fourth column), and so on.

Besides information received as log information, stock database 111 contains information input, by a user, to an application of terminal device 12, etc. Moreover, the usage priority order of entered food has been determined in stock database 111. Accordingly, when consumption of stock is prioritized in determination of presentation information, which will be described later, appropriate food such as food closest to the expiration date, food whose remaining amount is large, or favorite food that a user often uses is prioritized to be used. Which one of the above-mentioned food, i.e., the food closest to the expiration date, food whose remaining amount is large, and favorite food that a user often uses, is to be given a priority may be adhered to a rule set by a user or may be automatically switched in accordance with, for example, how close the food is to the expiration date or a degree of how large the remaining amount is. Moreover, although not illustrated here, a replenishment time frame during which replenishment such as doing grocery shopping is possible and a consumption time frame during which the replenishment is impossible may be set. During the replenishment time frame, generation of presentation information predicated on replenishment of food may be allowed, whereas during the consumption time frame, generation of presentation information predicated on replenishment of food may be prohibited. Note that the number of food items carried as stock may be four or more.

FIG. 4A is a diagram illustrating one example of a preference database according to the embodiment. Preference database 112 is contained in user profile information, and stores information on a preference for recipe information unique to a certain user. One preference database 112 is created for each of users. Preference database 112 contains, as shown in FIG. 4A, preferred recipe characteristics (first column), and weighted scores (second column) for respective preferences of a user, for example. For example, in the diagram, the following are listed as user preferences: low-calorie, time-saving, seasonal, and often-used food. From the above, this user tends to favor low-calorie recipes, time-saving recipes, recipes using seasonal food, and recipes using regularly- and often-used food.

Furthermore, for these preferences, the weighted scores allow us to understand which one of the preferences that the user places greater importance than importance placed on other preferences. For example, a weighted score has a greater numeric value for a preference on which a greater importance is placed. In the above-described preference database 112, entries of "low-calorie", "time-saving", and "seasonal" are classified based on tags (e.g., automatically tagged by textual identification) assigned to recipes accessed by a user using terminal device 12, and are created from the frequency of access to the recipes. Moreover, an entry of "often-used food" in preference database 112 is created from, for example, information on food that is frequently registered in the stock database and whose remaining amount is reduced beyond a certain level.

In the present embodiment, when presentation information is generated, a candidate for presentation information that meets a user preference is selected from among candidates for presentation information by consulting user preference database 112, and the candidate that met the user preference is used as presentation information. In this case, when preferences in each of the candidates meet user preferences (when the candidates for presentation information and user preferences have the same recipe characteristics), weighted scores of the recipe characteristics that have met the user preferences are assigned using weighted scores, and a candidate having the largest total value of assigned weighted scores in the end is preferentially used as presentation information. With this, not only presentation information that meets a user preference is presented, but also presentation information in the descending order from presentation information that meets the user preference to the greatest degree is presented. Accordingly, such presentation information has advantages of readily attracting user interest and being less prone to be regarded as insignificant information presentation.

Note that the embodiment here has presented, as one example of preference database 112 shown in FIG. 4A, an example of creating, for each of users, a preference database containing preferred recipe characteristics (first column) and weighted scores for respective preferred recipe characteristics (second column). However, weights of these preferences can be changed to suit time frames, days of a week, and the classification between weekdays and holidays, based on, for example, log analyses, results of surveys, and general knowledge (stated differently, tendencies generalized by a large number of users), to change the weighted scores for respective characteristics in accordance with respective time frames, respective days of a week, etc. In other words, user log information used in creating preference database 112 may be personal log information of a single user or may be typical log information of a large number of users.

Meanwhile, time information may be thought to contain, in addition to information on time as is, information on which one of time groups that the time belongs to. The time groups correspond to a daily life cycle of ordinary people, and include, for example: a time group ranging from a wake-up time to the time of breakfast; a time group ranging from the time after the breakfast to the time before lunch; a time group of the time of lunch; a time group ranging from the time after the lunch to the time before supper; a time group ranging from the time of supper to the time before bedtime; and a time group ranging from the time of bedtime to the wake-up time. Moreover, state tendencies such ordinary people tend to display (stated differently, tendencies generalized by a large number of users) are known for each of the time groups that constitute a daily life cycle of the people. For this reason, the time information can be thought to contain, in addition to information on time as is, information on a state estimated at the time from a daily life cycle of such ordinary people. In other words, according to the interpretation of time information as described above, profile information such as preference database 112 can be created from the time information, based on information on a state of a person at the time.

FIG. 4B is a diagram illustrating one example of changes made in weighted scores in the preference database according to the embodiment. As shown in FIG. 4B, in order to conform to the fact that there are many people who have light meals in the morning based on, for example, log analyses, results of surveys, and general knowledge, weighted scores can be set to readily meet a condition of a light meal by setting weighted scores of recipe characteristics of low-calorie and stock relatively high, particularly by setting the weighted score of low-calorie higher. Here, the embodiment has presented one example of changes made in recipe characteristics in accordance with time frames and weighted scores, but recipe characteristics and weighted scores may be changed by capitalizing on characteristics embodied by attributes of the day, such as days of a week, the classification between weekdays and holidays, and days before holidays. For example, from knowledge that people tend to have little spare time during weekdays based on log analyses, results of surveys, and general knowledge, weighted scores of stock and time-saving can be set high. Whereas, considering the fact that people tend to have relatively more spare time during holidays, weighted scores of time-saving and stock can be set low or weighted scores of recipe characteristics of time-intensive recipes and recipes using recommended food can be set high. As described above, user preference database 112 can change weighted scores for recipe characteristics based on time frames as well as knowledge of behaviors of ordinary people displayed in accordance with attributes of the day, such as days of a week and the classification between weekdays and holidays. Moreover, preference database 112 can be used as a preference database for all users or a preference database common to a user group consisting of several users.

FIG. 5A is a diagram illustrating one example of a syntax database according to the embodiment. Syntax database 113 is one example of a structure database, is contained in user profile information, and stores information on presentation structures as presentation patterns of presentation information. Specifically, as shown in FIG. 5A, in syntax database 113, different syntaxes are set for respective time frames when a day is divided into the time frames. Syntax database 113 is a database for presenting presentation information having an appropriate length of information (or an amount of information) depending on a degree of how busy a user is in each time frame. Syntaxes set in syntax database 113 include variables into which expressions in expression database 114 are inserted. Expression database 114 will be described later. In other words, presentation information is generated by inserting an expression in expression database 114 into a syntax in syntax database 113.

As shown in FIG. 5A, syntax database 113 contains time frames (first column) and syntaxes (second column). Syntax database 113 is also a database unique to a certain user, and is created for each of users. The time frame ranging from 6:00 to 11:00 is found to be, from log information, the busiest time of the day for a user of the present example, and thus the shortest syntax "{α-1}, how would you like {recipe name}?" is set for the time frame. In addition, the time frame ranging from 11:00 to 16:00 is found to be, from log information, the least busy time of the day for the user of the present example, and thus the longest syntax "{α-1}, how would you like {recipe name}? {β-3} {γ-2}" is set for the time frame. Moreover, the time frame ranging from 16:00 to 18:00 is found to be, from log information, a moderately busy time for the user of the present example, and thus a syntax having a moderate length, "{α-1}, how would you like {recipe name}? {γ-2}", is set for the time frame. Note that the above-mentioned variables are portions where pairs of marks {} are placed ({α-1}, {β-3}, {γ-2}, {recipe name}) in the above-described syntaxes, and expressions are inserted into the pairs of marks. The expressions to be inserted will be described later. Note also that syntaxes are not limited to the above examples. Syntaxes may be set in a style more literal or colloquial than the style of the exemplified syntaxes.

The variables {α-1}, {β-3}, and {γ-2} are variables into which presentation reasons for presenting presentation information (i.e., reasons for recommending such recipes) are inserted. These Greek letters a, β, and γ denote locations in a syntax, and the numbers 1, 2, and 3 denote order of recommendation. For example, the variable {a-1} is a variable given the highest priority to be inserted in the location of α in a syntax. When the variables {α-1}, {β-3}, and {γ-2} are replaced by {α-3}, {β-2}, and {γ-1}, a syntax having a different order of recommendation for inserting the variables can be set without changing locations into which the variables are inserted.

The presentation reasons are stored in a database as expressions. The presentation reasons are selected from among several candidates based on recipe characteristics, and inserted into variables in a syntax. Here, the variables {α-1}, {γ-2}, and {β-3} are in descending order of priority. In other words, the variable {a-1} is presented although a user is busy, but the variables {γ-2} and {β-3} are variables to be omitted depending on a degree of how busy the user is. As described above, since the minimum amount of information is presented depending on a user situation, there is an advantage that a user is less likely to feel annoyance. Note that the variable {α-1} need not be presented in some cases. In this case, a syntax without the variable {a-1} (e.g., "How would you like {recipe name}?) is to be set in syntax database 113 for a time frame found to be the busiest time of the day. Moreover, a syntax may contain four or more variables exceeding {γ-2}.

As shown in FIG. 5B, a speech characteristic database may be possessed in addition to syntax database 113. The speech characteristic database is contained in user profile information, and stores, for each of time frames when a day is divided into the time frames, speech characteristic information that is a parameter used when speech synthesis is performed. Speech characteristics include, for example, a reading speed, sound level, and voice quality. Note that these speech characteristics contained in speech characteristic database are mere examples. Accordingly, other speech characteristics can be appropriately added to create the speech characteristic database.

Note that the embodiment here has presented, as one example of syntax database 113 shown in FIG. 5A, an example of syntax database 113 that is unique to a user and is created for each of users. However, syntax database 113 can be changed to suit conditions such as time frames, days of a week, and the classification between weekdays and holidays, based on, for example, log analyses, results of surveys, and general knowledge. In other words, syntax database 113 that is information on presentation structures as presentation patterns of presentation information shown in FIG. 5A can be changed with respect to information such as time frames, days of a week, and the classification between weekdays and holidays. For example, from the fact that many people are found to spend busy weekday mornings based on log analyses, results of surveys, and general knowledge, the shortest syntax "{α-1}, how would you like {recipe name}?" is set. Whereas, considering the fact that people have relatively more spare time during holidays and nights before the holidays, the longest syntax "{α-1}, how would you like {recipe name}? {β-3} {γ-2}" can be set, for example. As described above, syntax database 113 can also change presentation patterns based on time frames and knowledge of behaviors of ordinary people displayed in accordance with attributes of the day, such as days of a week and the classification between weekdays and holidays. Syntax database 113 can also be used as a syntax database for all users or a syntax database common to a user group consisting of several users.

FIG. 6 is a diagram illustrating one example of an expression database according to the embodiment. Expression database 114 is a database unique to a user or generalized by a plurality of users, and stores information on which expression is to be inserted into a variable portion of a syntax. As shown in FIG. 6, expression database 114 contains recipe characteristics (first column), parameters (second column), recommendation expressions a (third column), recommendation expressions b (fourth column), recommendation expressions c (fifth column), and so on. For example, "low-calorie" as a recipe characteristic is associated with a specific number of kilocalories (kcal) in the parameter. The value (or character string) of the parameter may be used as a portion of a recommendation expression. In recommendation expression a, an expression "{calories} and healthy" is set. In recommendation expression b, an expression "low-calorie" is set. In recommendation expression c, an expression "It is a low-calorie, healthy recipe." is set. As can be seen from the above, recommendation expression a is an expression to be inserted immediately before a sentence of some type. Recommendation expression b is an expression to be inserted after a sentence as another sentence. Recommendation expression a is an expression to be inserted into the portion of variable {α-1} in a syntax, and recommendation expression b and recommendation expression c are expressions to be inserted into the portion of variable {β-3} and the portion of variable {γ-2}, respectively. Note that a recommendation expression may be set other than recommendation expression a, recommendation expression b, and recommendation expression c.

FIG. 7 is a diagram illustrating one example of recipe search results according to the embodiment. The recipe search results are one example of data on candidates for presentation information, and contain recipes extracted from a recipe database using search criteria created based on weighted scores, recipe characteristics in agreement with the search criteria, and order of priority for these search criteria. For example, as shown in FIG. 7, recipe search results contain recipe names (first column), recipe characteristics in agreement with search criteria (second column), parameters for the recipe characteristics (third column), and presentation order in accordance with weighted scores (fourth column). The recipe search results shown in FIG. 7 are an example of search results based on preference data shown in FIG. 4A. This user tends to favor low-calorie recipes, time-saving recipes, recipes using seasonal food, and recipes using regularly- and often-used food. As a result of searching based on the weighted scores, say that "twice-cooked pork" is output as the recipe having the highest total value of the weighted scores. Here, as a parameter related to low-calorie, calorie information (300 kcal) that is recipe data of this recipe is output. Other characteristics are input in the same manner, and presentation order is output in the descending order of weighted scores. Since this recipe data does not agree with time-saving, the parameter and presentation order are not output. As has been described above, recipe search results contain recipe characteristics that agree with search criteria and associated data. With this, information on why such recipe is proposed can be presented.

The recipe search results described here is obtained by extracting recipes from, for example, a recipe database not illustrated. In other words, the recipe database stores a large number of information items equivalent to the above-described recipe search results including information items on recipes not extracted.

Note that event database 115 will be described later, along with a description of operation performed by control device 100.

### [Operation]

Next, one example of operation performed by the above-described control device 100 will be described with reference to FIG. 8. FIG. 8 is a flowchart illustrating an example of operation performed by the control device according to the embodiment. As shown in FIG. 8, when control device 100 starts operation, operation history receiver 101 and log information extractor 106 receive log information and accumulate the log information in the first place (step S11). Profile generator 107 generates profile information based on log information obtained at a particular time point or at a plurality of time points, or a combination of time information and any one of a log analysis, a result of a survey, general knowledge, etc. More specifically, profile generator 107 generates various types of databases contained in profile information or updates the generated databases contained in the profile information, to generate or regenerate the profile information.

Next, time receiver 102 receives time information from time server 13 (step S12). Step S11 and step S12 may be collectively called as a receiving step, and may be performed simultaneously as a combined step. Here, based on the log information and time information, presentation information generator 109 determines whether a trigger for generating and presenting presentation information has been detected (step S13). Detection of a trigger means determining whether at least one of the received log information or received time information has satisfied a condition. When presentation information generator 109 determines that a trigger has been detected (Yes in S13), presentation information generator 109 further determines whether the newly received log information deviates from a normal-time condition that has been set based on log information received in the past (step S14). Deviation from a normal-time condition means satisfying a deviation condition for log information that has been set in advance. The deviation condition is, for example, a condition that the number of times the door of a refrigerator has opened and closed is greater than or equal to a predetermined number of times, a condition that an amount of time spent for watching a TV is greater than a predetermined amount of time, or a condition that the number of times accessed to a recipe using terminal device 12 is greater than or equal to a predetermined number of times. Note that these conditions are mere examples. Log information and conditions for the log information are to be set as appropriate. Moreover, although the trigger detection in step S13 and determination of an occurrence of deviation from a normal-time condition in step S14 have been described as individually performed steps, an occurrence of deviation from a normal-time condition as is may be detected as a trigger for generating and presenting presentation information in a deviated-time pattern. In other words, a combined step in which step S13 is included in step S14 may be performed. In this case, the combined step is performed before step S13 in which a trigger is detected in a normal-time condition, and step S14 is omitted accordingly. When a trigger is not detected by the above-described determination, etc. (No in S13), the process is repeated from step S11.

Alternatively, when a trigger is detected by the above-described determination, etc. (Yes in S13), candidate selector 108 selects, in cooperation with presentation candidate manager 103 and storage 105 (the recipe database not particularly illustrated), presentation information from among candidates in the first place (step S15). Here, "twice-cooked pork" will be described as a recipe selected from among candidates on the assumption that "twice-cooked pork" contained in the recipe database has the highest total value of weighted scores. Say that the time indicated in the received time information is 17:00. Thereafter, presentation information generator 109 consults, in particular, syntax database 113 within the profile information in storage 105 to determine a syntax in accordance with a time frame (step S16). Since the time falls into the time frame ranging from 16:00 to 18:00, a syntax determined is "{α-1}, how would you like {recipe name}? {γ-2}". Next, presentation information generator 109 consults, in particular, expression database 114 within the profile information in storage 105 to determine expressions to be inserted into {a-1} and {γ-2} (step S17). Here, as shown in FIG. 7, expressions corresponding to "often-used food" and "low-calorie" among recipe characteristics are determined from the order of priority.

In other words, presentation information generator 109 determines the expression "Using {food name}" as an expression to be assigned to the variable {α-1} and "It is a low-calorie, healthy recipe" as an expression to be assigned to the variable {γ-2}. The food used in the recipe, "pork belly" is inserted into {food name}. Presentation information generator 109 generates presentation information from a syntax and expressions determined as described above (presentation information generation step S18). The presentation information to be generated would be "Using a pork belly, how would you like "twice-cooked pork"? It is a low-calorie, heathy recipe." Thereafter, presentation information transmitter 104 converts the generated presentation information from text data into a synthesized speech. In this case, speech characteristics may be changed in the same manner as syntaxes. The speech characteristics are characteristics of a speech such as a reading speed, sound level, and voice quality, other than expressions. Thereafter, presentation information transmitter 104 transmits the generated presentation information to presentation device 14 (transmission step S19).

Here, FIG. 9 is a diagram illustrating one example of an event database according to the embodiment. When presentation information generator 109 determines that the log information deviates from a normal-time condition (Yes in S14), presentation information generator 109 generates presentation information in line with a deviated-time syntax and a deviated-time pattern including deviated-time expressions. Hereinafter, a detailed description will be provided. In FIG. 9, syntaxes and recipe characteristics before an occurrence of an event are shown on the trailing-end side of arrow ar, and one example of event database 115 is shown on the leading-end side of arrow ar. When an event occurs, weighted scores in preference database 112 and syntaxes for time frames in syntax database 113 change. For example, event database 115 contains conditions determined as deviating from normal-time conditions (i.e., conditions under which the answer to step S13 is Yes) or stated differently, event conditions (first column), recipe characteristics and weighted scores in preference database 112 to be adopted when an event occurs (second column), and syntaxes in syntax database 113 to be adopted when an event occurs (third column).

For example, say that the wake-up time is 6 o'clock, an event condition that the wake-up time is 6 o'clock or before 6 o'clock is satisfied (assuming that the normal time of waking up, i.e., the time of waking up under a normal-time condition, is 7 o'clock). Since the time deviates from the normal time, it can be thought that a user has more spare time compared to the normal time. Accordingly, weighted scores in the preference database change. The weighted score for "seasonal" is increased to 7, whereas the weighted score for "time-saving" is decreased to 2. As a consequence, although candidate selector 108 selects, in cooperation with presentation candidate manager 103 and storage 105 (the recipe database not particularly illustrated) presentation information from among candidates (step S20), a candidate different from the candidate selected in step S15 is selected.

Furthermore, as shown in FIG. 9, a syntax "{α-1}, how would you like {recipe name}? {γ-2}" which is longer than the syntax set for 6:00 to 11:00 stating "{α-1}, how would you like {recipe name}?" is selected as a syntax (determined as a deviated-time syntax, step S21). Then, expressions are determined in accordance with weighted scores corresponding to the above-described event (deviated-time expression is determined, step S22). Thereafter, the operation proceeds to step S18 to perform speech synthesis. As a speech characteristic, "slow" that is slower than "normal" set for 6:00 to 11:00 is selected. Since the operation to be performed thereafter is the same as the operation performed for the normal time, the description is omitted.

As described above, in the present embodiment, presentation information is generated in line with a deviated-time pattern different from a presentation pattern previously used, in response to an occurrence of an unexpected event. With this, awkwardness felt by a user due to generation of the same presentation information for both the normal time and irregular times like deviated times can be reduced. Stated differently, since an appropriate presentation pattern can be set even for irregular times, information appropriate for a user can be presented. Moreover, the use of the present configuration allows utterance details to be set in accordance with a target date of seasonal events such as holidays and anniversaries and a target time of the target event by designating a particular day and time as a deviation condition.

Note that event conditions, etc., shown in event database 115 are mere examples. Accordingly, event conditions may be added and removed in an appropriate manner. In addition, event database 115 need not include all components shown in FIG. 9, and may include some of the components.

### [Variation]

Hereinafter, a variation of the embodiment will be described with reference to FIG. 10. FIG. 10 is a diagram illustrating an appearance of information presentation according to a variation of the embodiment. In the description below, elements substantially the same as those in the embodiment will be omitted, and different points will be mainly described.

Instead of presentation device 14 that uses a speech to present presentation information, FIG. 10 illustrates an example of using presentation device 14a that uses an image to present presentation information. Note that the image here is, for example, information on luminance values of pixels in two-dimensional form, and is information recognized by a user as words, graphics, symbols, colors, etc., in accordance with combinations of the luminance values of the pixels. Any type of device may be used as presentation 14a as long as information can be presented to a user by displaying an image. Presentation device 14a includes, for example, a display device including a display and a projector that projects an image by emitting light onto a projection plane.

As shown in FIG. 10, presentation information can be presented to a user by displaying presentation information as an image. In this case, control device 100 includes a layout database instead of syntax database 113. Layouts of information contained in images for respective time frames are different such that the amount of information is proportional to how busy a user is. Moreover, instead of presentation information transmitter 104, control device 100 includes a presentation information transmitter that converts presentation information of text data into an image. For example, in the example shown in FIG. 10, recipe name 51, recipe image 52, recipe introduction expression 53, and recommended reason tags 54 are given as images. Recipe introduction expression 53 can be, for example, adjusted to fit in one line by changing a syntax or a recommendation expression. With this, presentation information can be efficiently presented without making the portion of the recipe introduction expression 53 too redundant even for, for example, terminal device 12 such as a smartphone having limitation on information that can be displayed at once. Moreover, for a time frame during which a user is not so busy, the layout may be changed so as to add description and the like (not illustrated) of each recommended reason tag, and for a time frame during which a user is busier, the layout may be changed so as to omit recipe introduction expression 53, recommended reason tags 54, etc.

### [Other Embodiments]

The control device, etc., according to the embodiment of the present disclosure have been hereinbefore described. However, the present disclosure is not limited to the embodiment.

For example, although the above has described the method of generating presentation information with consideration given to (i) a result of recipe search conducted by assigning weight information to the recipe database possessed by the control device according to the above-described embodiment and (ii) a syntax proportional to a time selected from syntax database 113 of profile information, the method of generating presentation information is not limited to the foregoing, as long as syntaxes and amounts of presentation information can be controlled in accordance with user situations, situations of household chores, etc. For example, while generative artificial intelligence (AI) such as ChatGPT is currently evolving, a method utilizing, as profile information, massive amounts of intelligence information possessed by such generative AI can be envisaged. Even in this case, utilization of, as presentation information, a result generated by inputting, into generative AI as an instruction, a combination of (i) syntax information based on time or information designating an amount of presentation information such as the number of characters and (ii) any one of or two or more of user information items can be envisaged. Here, the user information items may be user attribute information separately obtained or information (e.g., user situations and household chore situations) obtained from log information obtained at a particular time point or a plurality of time points. Moreover, an instruction can be given to incorporate, at the beginning of the output result generated by such generative AI, designated information such as recommended reasons. In addition, by giving an instruction to limit the number of characters, a recommendation expression can also be generated such that recipe introduction expression 53 fits in one line in the same manner as the application example shown in FIG. 10.

In addition, each of the processing units included in the control device according to the above-described embodiment is typically implemented as a large-scale integration (LSI) circuit that is an integrated circuit. These circuits may be individually implemented as a single chip, or some or all of the circuits may be implemented as a single chip.

Circuit integration is not limited to LSI; a dedicated circuit or generic processor may be used to implement circuit integration. A field programmable gate array (FPGA) that is programmable after manufacturing of the LSI circuit, or a reconfigurable processor whose circuit cell connections and settings in the LSI circuit are reconfigurable, may be used.

Moreover, in the above-described embodiment, each element may include a dedicated hardware product or may be implemented by executing a software program suitable for the element. Each element may be implemented by a program execution unit such as a central processing unit (CPU), processor, or the like, loading and executing a software program stored in a storage medium such as a hard disk or a semiconductor memory.

One aspect of the present disclosure may be implemented as, for example, a control method of controlling a presentation device which is employed by the control device. In addition, one aspect of the present disclosure may be a computer program that causes a computer to execute distinctive steps included in the control method.

The control device according to the above-described embodiment may be implemented as a single device or by a plurality of devices. When the control device is implemented by a plurality of devices, the elements included in the control device may be assigned to the plurality of devices in any manner. For example, the control device may be included in a mobile terminal. Moreover, for example, at least one of functional elements of the control device may be implemented by a mobile terminal or a server (e.g., cloud server) communicable with a mobile terminal. When the control device is implemented by a plurality of devices, a communication method used between the plurality of devices is not particularly limited, and thus may be wireless communication or wired communication. Moreover, wireless communication and wired communication may be combined to be used between the devices.

The block diagrams illustrate examples of the division of functional blocks. Accordingly, a plurality of functional blocks may be implemented as a single functional block, a single functional block may be broken up into a plurality of functional blocks, and some of functions may be transferred to another functional block. Moreover, the functions of a plurality of function blocks having similar functions may be processed by a single hardware product or a single software program in parallel or by time-division.

The order of steps in each flowchart is presented to exemplify the present disclosure in detail. Accordingly, the order of the steps may be other than the order presented above. Moreover, some of the steps may be executed at the same time as (in parallel with) other steps.

The present disclosure also encompasses: embodiments achieved by applying various modifications conceivable to those skilled in the art to the present embodiment; and embodiments achieved by optionally combining the elements in different embodiments, as long as these embodiments are not limited to the one or more aspects described above and do not depart from the spirit of the present disclosure.

### [Industrial Applicability]

The present disclosure is applicable to presentation systems that cause presentation information to be appropriately presented.

### [Reference Signs List]

- 11: apparatus
- 12: terminal device
- 13: time server
- 14, 14a: presentation device
- 51: recipe name
- 52: recipe image
- 53: recipe introduction expression
- 54: recommended reason tag
- 100: control device
- 101: operation history receiver
- 102: time receiver
- 103: presentation candidate manager
- 104: presentation information transmitter
- 105: storage
- 106: log information extractor
- 107: profile generator
- 108: candidate selector
- 109: presentation information generator
- 111: stock database
- 112: preference database
- 113: syntax database
- 114: expression database
- 115: event database

## Claims

1. A control device for presenting a user with presentation information, the control device comprising:
a receiver that receives, from an apparatus that is communicatively connected via a network, at least one of log information or time information;
a presentation information generator that determines a presentation pattern of the presentation information in accordance with at least one of the log information received or the time information received, and generates the presentation information in line with the presentation pattern determined; and
a transmitter that transmits the presentation information generated to a presentation apparatus that is communicably connected via the network to cause the presentation apparatus to present the user with the presentation information.

2. The control device according to claim 1, wherein
the presentation information generator:
generates profile information of the user based on the log information received at each of a plurality of time points; and
determines the presentation pattern in accordance with (i) at least one of the log information received or the time information received and (ii) the profile information generated.

3. The control device according to claim 1, wherein
the presentation information generator:
generates profile information of the user based on the log information received at each of a plurality of time points; and
determines a presentation detail to be contained in the presentation information in accordance with (i) at least one of the log information received or the time information received and (ii) the profile information generated.

4. The control device according to claim 2 or 3, wherein
the profile information contains a structure database in which a presentation structure of the presentation pattern is set in advance for each of a plurality of time frames, and
the presentation information generator determines the presentation pattern to use the presentation structure set for a time frame corresponding to a time indicated in the time information received, the time frame being among the plurality of time frames.

5. The control device according to claim 2 or 3, wherein
the profile information contains a stock database of an item possessed by the user,
a plurality of time frames include a replenishment time frame during which replenishment of the item is possible and a consumption time frame during which replenishment of the item is impossible, and
the presentation information generator:
when, among the plurality of time frames, a time frame corresponding to a time indicated in the time information received is the replenishment time frame, allows generation of the presentation information predicated on replenishment of the item; and
when, among the plurality of time frames, a time frame corresponding to the time indicated in the time information received is the consumption time frame, prohibits generation of the presentation information predicated on replenishment of the item.

6. The control device according to claim 2 or 3, wherein
the profile information contains one or more preferences of the user and one or more weighted scores assigned to the one or more preferences, and
among candidates for the presentation information, the presentation information generator more preferentially uses, as the presentation information, a candidate having a larger total value of a weighted score assigned to a preference met by the candidate, the preference being among the one or more preferences.

7. The control device according to claim 2 or 3, wherein
the presentation information generator:
determines the presentation pattern of the presentation information as a deviated-time pattern when newly received log information deviates from a normal-time condition set based on the log information received in past, the newly received log information being the log information; and
generates the presentation information in line with the deviated-time pattern determined.

8. The control device according to any one of claims 1 to 3, wherein
the presentation information is recipe information for cooking a dish.

9. The control device according to any one of claims 1 to 3, wherein
the presentation information is reproduced as a speech and presented to the user.

10. The control device according to claim 9, wherein
the determination of the presentation pattern includes determination of at least one of an utterance syntax of the speech or a speech characteristic of the speech when the presentation information is reproduced,
the log information received comprises log information items received, the time information received comprises time information items received, and the presentation information generated comprises presentation information items generated, and
(i) one of the presentation information items generated in accordance with at least one of the log information items received or one of the time information items received and (ii) a different one of the presentation information items generated in accordance with at least one of a different one of the log information items received or a different one of the time information items received have a difference in at least one of the utterance syntax of the speech or the speech characteristic of the speech when the presentation information is reproduced.

11. The control device according to any one of claims 1 to 3, wherein
the presentation information is displayed as an image and presented to the user.

12. The control device according to claim 11, wherein
the determination of the presentation pattern includes at least one of determination of a display layout of the image or a syntax of a sentence in the image when the presentation information is displayed,
the log information received comprises log information items received, the time information received comprises time information items received, and the presentation information generated comprises presentation information items generated, and
(i) one of the presentation information items generated in accordance with at least one of the log information items received or one of the time information items received and (ii) a different one of the presentation information items generated in accordance with at least one of a different one of the log information items received or a different one of the time information items received have a difference in at least one of the display layout of the image or the syntax of the sentence in the image when the presentation information is displayed.

13. A control method to be executed by a control device for presenting a user with presentation information, the control method comprising:
receiving, from an apparatus that is communicatively connected via a network, at least one of log information or time information;
determining a presentation pattern of presentation information in accordance with at least one of the log information received or the time information received and generating the presentation information in line with the presentation pattern determined; and
transmitting the presentation information generated to a presentation apparatus that is communicably connected via the network to cause the presentation apparatus to present the user with the presentation information.

14. A program for causing a computer to execute the control method according to claim 13.
